# EUROPÄISCHE PATENTSCHRIFT

(11) **EP 3 000 118 B1**
(45) Veröffentlichungstag und Bekanntmachung des Hinweises auf die Patenterteilung: **29.08.2018**
(21) Anmeldenummer: 14735561.4
(22) Anmeldetag: 02.07.2014
(51) Int. Cl.: H01H 33/59

(54) **GLEICHSTROMSCHALTEINRICHTUNG**
DIRECT CURRENT SWITCHING DEVICE
DISPOSITIF DE COMMUTATION À COURANT CONTINU

(30) Priorität: 11.07.2013 DE 102013213602
(43) Veröffentlichungstag der Anmeldung: 30.03.2016
(73) Patentinhaber: Siemens Aktiengesellschaft, 80333 München (DE)
(72) Erfinder: JÄNICKE, Lutz-Rüdiger, 15831 Mahlow (DE); TEICHMANN, Jörg, 14624 Dallgow-Döberitz (DE); WEISKER, Jan, 14656 Brieselang (DE)
(86) Internationale Anmeldenummer: PCT/EP2014/064085
(87) Internationale Veröffentlichungsnummer: WO 2015/003974

(56) Entgegenhaltungen:
- EP-A1- 2 523 204
- EP-A2- 0 092 205
- US-A- 4 159 498
- US-A- 4 216 513
- US-A- 4 434 332

## Beschreibung

Die Erfindung bezieht sich auf eine Gleichstromschalteinrichtung zum Schalten von Gleichströmen, insbesondere Gleichströmen in kA-Bereich, mit den Merkmalen gemäß dem Oberbegriff des Patentanspruchs 1.
Eine derartige Gleichstromschalteinrichtung ist aus der europäischen Patentschrift EP 2 221 845 B1 bekannt. Diese Gleichstromschalteinrichtung weist eine Schalteinheit, einen Schwingkreis und einen Spannungsableiter auf. Der Schwingkreis erzeugt beim Ausschalten der Schalteinheit einen oszillierenden Schwingstrom, der sich mit dem während des Ausschaltens noch durch die Schalteinheit fließenden Gleichstrom unter Bildung eines oszillierenden Überlagerungsstromes überlagert. Der Überlagerungsstrom wird bei einem Nulldurchgang abgeschaltet. Zur Steuerung der Anregung des Schwingkreises ist eine Steuereinrichtung vorgesehen.
Der Erfindung liegt die Aufgabe zugrunde, eine Gleichstromschalteinrichtung anzugeben, die einen besonders einfachen Aufbau aufweist und ein besonders schnelles Abschalten des Gleichstroms ermöglicht.
Diese Aufgabe wird erfindungsgemäß durch eine Gleichstromschalteinrichtung mit den Merkmalen gemäß Patentanspruch 1 gelöst. Vorteilhafte Ausgestaltungen der erfindungsgemäßen Gleichstromschalteinrichtung sind in Unteransprüchen angegeben.

Danach ist erfindungsgemäß vorgesehen, dass die Verzögerungsdauer der Verzögerungseinrichtung und die Eigenfrequenz des Schwingkreises derart aufeinander abgestimmt sind, dass das Ausschalten der zweiten Schalteinheit erst dann begonnen wird, wenn die Amplitude des oszillierenden Schwingstroms einen Wert von mindestens 75% des auszuschaltenden Gleichstromes (I) aufweist. Ein weiterer wesentlicher Vorteil der erfindungsgemäßen Gleichstromschalteinrichtung ist darin zu sehen, dass eine separate Steuereinrichtung, wie sie bei der vorbekannten Gleichstromschalteinrichtung zum Ansteuern des Schwingkreises vorhanden ist, nicht erforderlich ist.
Besonders einfach und damit vorteilhaft lässt sich ein unterschiedliches Schaltverhalten der ersten und zweiten Schalteinheit erreichen, wenn es auf unterschiedlichen physikalischen Effekten in Schaltkammern der Schalteinheiten beruht.
Um ein besonders schnelles Anregen des Schwingkreises durch die erste Schalteinheit zu erreichen, wird es als vorteilhaft angesehen, wenn die erste Schalteinheit beim Ausschalten des Gleichstromes eine größere Lichtbogenbrennspannung als die zweite Schalteinheit erzeugt.
Relativ hohe Lichtbogenbrennspannungen weisen beispielsweise Isoliergasschalteinheiten auf, so dass es als vorteilhaft angesehen wird, wenn die erste Schalteinheit eine Isoliergasschalteinheit ist.
Vorzugsweise enthält die erste Schalteinheit als Isoliergas SF₆ oder ein SF₆-haltiges Gasgemisch.

Bezüglich der zweiten Schalteinheit wird es als vorteilhaft angesehen, wenn diese derart ausgestaltet ist, dass sie Ströme mit größerer Stromsteilheit beim Nulldurchgang als die erste Schalteinheit schalten kann. Wie bereits erwähnt, dient die zweite Schalteinheit vorzugsweise zum Ausschalten des durch die Reihenschaltung der beiden Schalteinheiten fließenden Stroms.
Schalter mit der Eigenschaft, auch große Stromsteilheiten beim Nulldurchgang sicher schalten zu können, sind beispielsweise Vakuumschalteinheiten, so dass es als vorteilhaft angesehen wird, wenn die zweite Schalteinheit eine Vakuumschalteinheit ist.
Besonders vorteilhaft ist es, wenn das unterschiedliche Schaltverhalten der beiden Schalteinheiten auf unterschiedlichen Gasfüllungen (unterschiedlich z. B. im Hinblick auf Gasdruck und/oder Gaszusammensetzung) in den Schaltkammern der Schalteinheiten beruht. Demgemäß wird es als besonders vorteilhaft angesehen, wenn die erste Schalteinheit eine Isoliergasschalteinheit und die zweite Schalteinheit eine Vakuumschalteinheit ist.
Zum Antreiben der beiden Schalteinheiten kann ein gemeinsamer Antrieb vorgesehen werden.

Alternativ oder zusätzlich kann die Verzögerungseinrichtung auf einem Federsprungmechanismus basieren, der zwischen die zweite Schalteinheit und den Antrieb geschaltet ist und während oder nach dem Ausschalten der ersten Schalteinheit gespannt wird und zum Ausschalten der zweiten Schalteinheit freigegeben wird.
Hinsichtlich der Verzögerungsdauer der Verzögerungseinrichtung wird es als vorteilhaft angesehen, wenn die Verzögerungsdauer und die Eigenfrequenz des Schwingkreises derart aufeinander abgestimmt sind, dass das Ausschalten der zweiten Schalteinheit erst nach einer Zeitspanne begonnen wird, die mindestens das Dreifache der Eigenfrequenz des Schwingkreises beträgt. Als Zeitpunkt des Ausschaltens wird hier der Zeitpunkt der Trennung der Schaltkontakte der jeweiligen Schalteinheit angesehen.
Die Erfindung bezieht sich darüber hinaus auf ein Verfahren zum Abschalten eines Gleichstromes, insbesondere eines Gleichstromes im kA-Bereich, bei dem eine Schalteinheit ausgeschaltet wird und ein Lichtbogen erzeugt wird, mit der an dem Lichtbogen auftretenden Lichtbogenspannung ein Schwingkreis angeregt wird und ein oszillierender Schwingstrom erzeugt wird, der sich mit dem während des Ausschaltens noch durch die erste Schalteinheit fließenden Gleichstrom unter Bildung eines Überlagerungsstromes überlagert, und beim Nulldurchgang des Überlagerungsstromes der Überlagerungsstrom abgeschaltet wird und die im Schwingkreis gespeicherte Energie durch einen Ableiter abgebaut wird.
Bezüglich eines solchen Verfahrens ist erfindungsgemäß vorgesehen, dass die Verzögerungsdauer der Verzögerungseinrichtung und die Eigenfrequenz des Schwingkreises derart aufeinander abgestimmt sind, dass das Ausschalten der zweiten Schalteinheit erst dann begonnen wird, wenn die Amplitude des oszillierenden Schwingstroms einen Wert von mindestens 75% des auszuschaltenden Gleichstromes (I) aufweist. Bezüglich der Vorteile des erfindungsgemäßen Verfahrens sei auf die obigen Ausführungen im Zusammenhang mit der erfindungsgemäßen Gleichstromschalteinrichtung verwiesen, da die Vorteile der erfindungsgemäßen Gleichstromschalteinrichtung denen des erfindungsgemäßen Verfahrens entsprechen.
Um ein besonders schnelles Abschalten hoher Gleichströme zu erreichen, wird es als vorteilhaft angesehen, wenn die erste Schalteinheit beim Ausschalten des Gleichstromes eine größere Lichtbogenbrennspannung als die zweite Schalteinheit erzeugt und die zweite Schalteinheit oszillierende Ströme mit größerer Stromsteilheit beim Nulldurchgang als die erste Schalteinheit schalten kann.
Vorzugsweise beruht das Schaltverhalten der ersten und zweiten Schalteinheit während des Ausschaltens auf unterschiedlichen physikalischen Effekten in Schaltkammern der Schalteinheiten.

Bezüglich der Verzögerung wird es als vorteilhaft angesehen, wenn das Ausschalten der zweiten Schalteinheit erst nach einer Zeitspanne begonnen wird, die mindestens das Dreifache der Eigenfrequenz des Schwingkreises beträgt.

Um ein schnelles Abschalten der zweiten Schalteinheit nach Anregung des Schwingkreises durch die erste Schalteinheit zu gewährleisten, wird es als besonders vorteilhaft angesehen, wenn während oder nach dem Ausschalten der ersten Schalteinheit ein Federsprungmechanismus gespannt wird und das Ausschalten der zweiten Schalteinheit erfolgt, indem der gespannte Federsprungmechanismus freigegeben wird.
Die Erfindung wird nachfolgend anhand von Ausführungsbeispielen näher erläutert; dabei zeigen beispielhaft:
- Figur 1: ein nicht zu der Erfindung gehörendes Beispiel für eine Gleichstromschalteinrichtung, bei der das unterschiedliche Schaltverhalten zweier Schalteinheiten auf unterschiedlichen physikalischen Effekten in Schaltkammern der Schalteinheiten beruht,
- Figur 2: ein nicht zu der Erfindung gehörendes Beispiel für eine Gleichstromschalteinrichtung, bei der die beiden Schalteinheiten durch einen gemeinsamen Antrieb angetrieben werden, und
- Figur 3: ein Ausführungsbeispiel für eine erfindungsgemäße Gleichstromschalteinrichtung, bei der eine Verzögerungseinrichtung vorhanden ist, die beim Ausschalten des Gleichstroms die erste Schalteinheit vor der zweiten Schalteinheit öffnet.
In den Figuren werden der Übersicht halber für identische oder vergleichbare Komponenten stets dieselben Bezugszeichen verwendet.

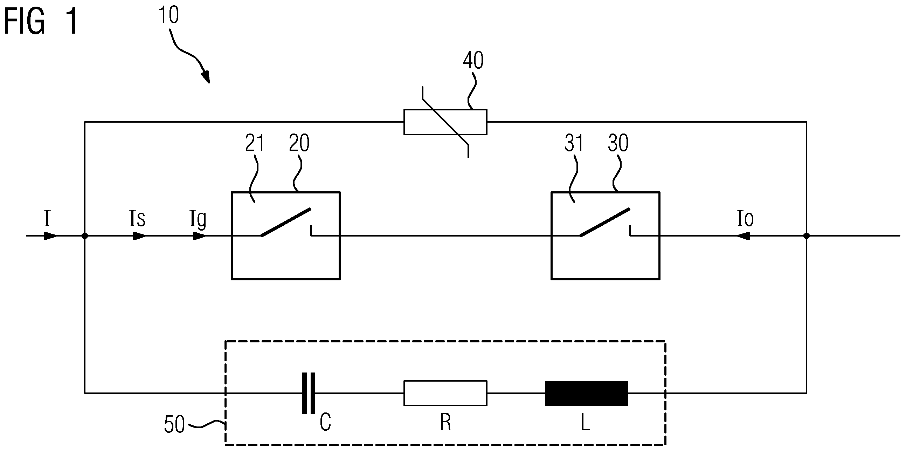

Die Figur 1 zeigt ein nicht zu der Erfindung gehörendes Beispiel für eine Gleichstromschalteinrichtung 10, bei der eine erste Schalteinheit 20 und eine zweite Schalteinheit 30 in Reihe geschaltet sind. Parallel zu der Reihenschaltung aus der ersten Schalteinheit 20 und der zweiten Schalteinheit 30 sind ein Spannungsableiter 40 sowie ein Schwingkreis 50 geschaltet.

Der Schwingkreis 50 kann beispielsweise durch einen Kondensator C, einen Widerstand R und eine Induktivität L gebildet sein.

Bei dem Beispiel gemäß Figur 1 werden zum Abschalten eines Gleichstroms I, insbesondere eines Gleichstroms im kA-Bereich, die beiden Schalteinheiten 20 und 30 gleichzeitig, zumindest näherungsweise gleichzeitig, geöffnet. Das Öffnen der beiden Schalteinheiten 20 und 30 kann durch individuelle, in der Figur 1 nicht gezeigte Antriebe erfolgen, die der jeweiligen Schalteinheit individuell zugeordnet sind.
Die erste Schalteinheit 20 und die zweite Schalteinheit 30 sind hinsichtlich ihres Schaltverhaltens unterschiedlich, wobei das unterschiedliche Schaltverhalten beim Abschalten auf unterschiedlichen physikalischen Effekten in den Schaltkammern 21 und 31 der beiden Schalteinheiten 20 und 30 beruht.
Nachfolgend wird beispielhaft davon ausgegangen, dass es sich bei der ersten Schalteinheit 20 um eine Isoliergasschalteinheit, deren Schaltkammer 21 mit SF₆-Isoliergas oder einem SF₆-haltigen Isoliergasgemisch gefüllt ist, und bei der zweiten Schalteinheit 30 um eine Vakuumschalteinheit handelt.
Aufgrund des in der Schaltkammer 21 der ersten Schalteinheit 20 vorhandenen Isoliergases wird die erste Schalteinheit 20 beim Ausschalten des Gleichstroms I eine größere Lichtbogenbrennspannung als die zweite Schalteinheit 30 erzeugen, bei der in der Schaltkammer 31 kein Isoliergas vorhanden ist, sondern Vakuum herrscht. Die an der ersten Schalteinheit 20 abfallende Lichtbogenbrennspannung führt zu einem relativ schnellen Anschwingen des Schwingkreises 50, so dass dieser einen oszillierenden Schwingstrom Io erzeugen und in die Reihenschaltung aus den beiden Schalteinheiten 20 und 30 einspeisen wird. Der oszillierende Schwingstrom Io überlagert sich mit dem während des Ausschaltens durch die Reihenschaltung fließenden Gleichstromes Is, wodurch ein Überlagerungsstrom Ig gebildet wird.

Sobald der Überlagerungsstrom Ig durch den Einfluss des oszillierenden Schwingstroms Io einen Nulldurchgang aufweist, wird die zweite Schalteinheit 30 den Überlagerungsstrom Ig abschalten. Ein solches Abschalten wird die zweite Schalteinheit ohne Weiteres gewährleisten können, weil sie aufgrund des Vakuums in der Schaltkammer 31 im Unterschied zu der ersten Schalteinheit 20 besonders gut geeignet ist, auch Ströme mit besonders großer Stromsteilheit beim Nulldurchgang abzuschalten.
Zusammengefasst dient die erste Schalteinheit 20 also dazu, den Schwingkreis 50 möglichst schnell anzuregen, um einen oszillierenden Schwingstrom Io in die Reihenschaltung aus der ersten Schalteinheit 20 und der zweiten Schalteinheit 30 einzuspeisen, und die zweite Schalteinheit 30 dient dazu, den durch die Überlagerung mit dem oszillierenden Schwingstrom Io gebildeten Überlagerungsstrom Ig beim Nulldurchgang trotz hoher Stromsteilheit abzuschalten.

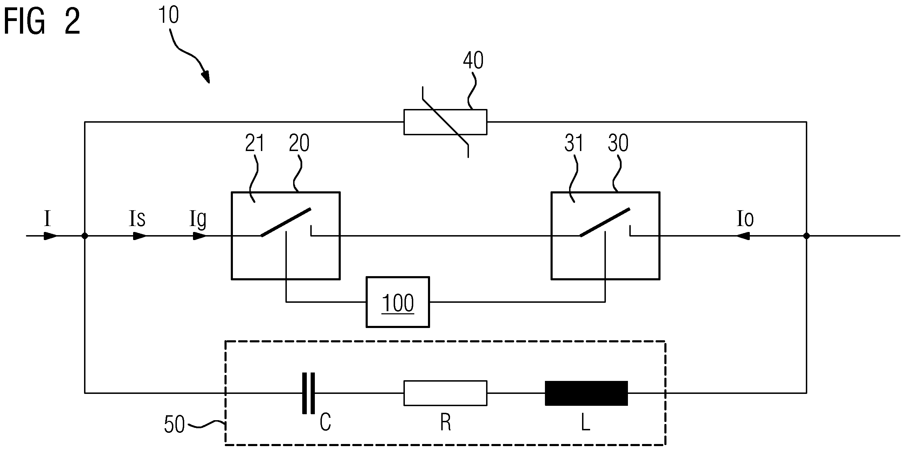

Die Figur 2 zeigt ein nicht zu der Erfindung gehörendes Beispiel für eine Gleichstromschalteinrichtung, die vom Aufbau her im Wesentlichen der Gleichstromschalteinrichtung gemäß Figur 1 entspricht. Auch die Gleichstromschalteinrichtung 10 gemäß Figur 2 weist eine erste Schalteinheit 20 in Form einer Isoliergasschalteinheit und eine zweite Schalteinheit 30 in Form einer Vakuumschalteinheit auf. Im Unterschied zu dem Ausführungsbeispiel gemäß Figur 1 werden die beiden Schalteinheiten 20 und 30 durch einen gemeinsamen Antrieb 100 ein- bzw. ausgeschaltet.

Bei dem Beispiel gemäß Figur 2 erfolgt das Ausschalten eines Gleichstroms I durch die beiden Schalteinheiten 20 und 30 durch den Antrieb 100 vorzugsweise gleichzeitig, zumindest näherungsweise gleichzeitig. Hinsichtlich der Arbeitsweise der Gleichstromschalteinrichtung 10 gemäß Figur 2 sei auf die obigen Ausführungen im Zusammenhang mit der Gleichstromschalteinrichtung 10 gemäß Figur 1 verwiesen, die hier entsprechend gelten.

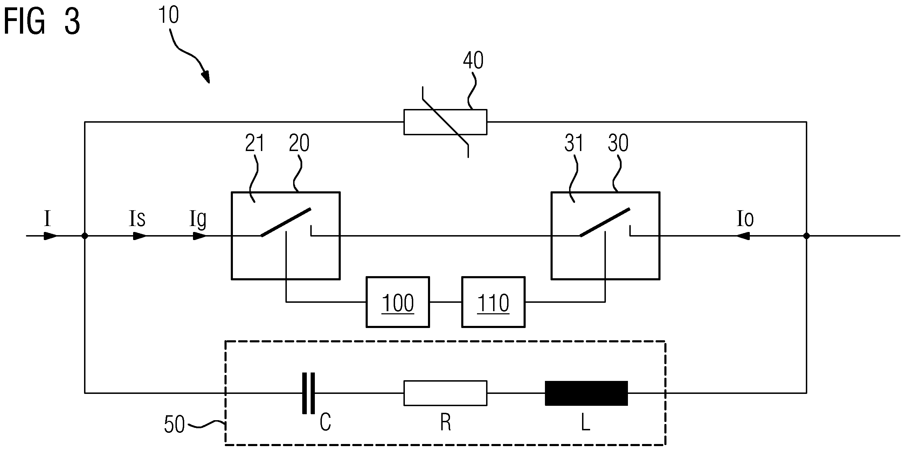

Die Figur 3 zeigt ein Ausführungsbeispiel für eine erfindungsgemäße Gleichstromschalteinrichtung 10, bei der die erste Schalteinheit 20 vorzugsweise durch eine Isoliergasschalteinheit und die zweite Schalteinheit 30 durch eine Vakuumschalteinheit gebildet ist. Ein Antrieb 100 dient dazu, die beiden Schalteinheiten 20 und 30 ein- oder auszuschalten.

Im Unterschied zu dem Beispiel gemäß Figur 2 ist bei der Gleichstromschalteinrichtung 10 gemäß Figur 3 eine zusätzliche Verzögerungseinrichtung 110 vorhanden, die beim Ausschalten des Gleichstroms I die zweite Schalteinheit 30 erst nach der ersten Schalteinheit 20 öffnet.

Die Verzögerungseinrichtung 110 weist ein Getriebe auf oder durch ein Getriebe gebildet ist, das zwischen der zweiten Schalteinheit 30 und dem Antrieb 100 geschaltet ist. Vorzugsweise weist die Verzögerungseinrichtung einen Federsprungmechanismus auf, der während oder nach dem Ausschalten der ersten Schalteinheit 20 gespannt wird und zum Ausschalten der zweiten Schalteinheit 30 freigegeben wird.

Das Ausschalten der zweiten Schalteinheit 30 beginnt erst dann, wenn die Amplitude des oszillierenden Schwingstroms Io einen Wert von mindestens 75 % des auszuschaltenden Gleichstroms I aufweist. Vorzugsweise wird das Ausschalten erst nach einer Zeitspanne begonnen, die mindestens das Dreifache der Eigenfrequenz des Schwingkreises 50 aufweist.
Durch das verzögerte Ausschalten der zweiten Schalteinheit 30 wird unterstützt, dass durch den an der ersten Schalteinheit 20 beim Ausschalten auftretenden Lichtbogen eine Lichtbogenbrennspannung entsteht, mit der der Schwingkreis 50 besonders schnell angeregt wird. Das Ausschalten der zweiten Schalteinheit 30 erfolgt dann erst, wenn durch den oszillierenden Schwingstrom Io sichergestellt ist, dass ein Nulldurchgang, der ein Ausschalten durch die zweite Schalteinheit 30 erlaubt, auch tatsächlich auftreten kann.

Obwohl die Erfindung im Detail durch ein bevorzugtes Ausführungsbeispiel näher illustriert und beschrieben wurde, so ist die Erfindung nicht durch das offenbarten Beispiel eingeschränkt und andere Variationen können vom Fachmann hieraus abgeleitet werden, ohne den Schutzumfang der Ansprüche zu verlassen.

### Bezugszeichenliste

- 10: Gleichstromschalteinrichtung
- 20: erste Schalteinheit
- 21: Schaltkammer
- 30: zweite Schalteinheit
- 31: Schaltkammer
- 40: Spannungsableiter
- 50: Schwingkreis
- 100: Antrieb
- 110: Verzögerungseinrichtung

- C: Kondensator
- I: Gleichstrom
- Ig: Überlagerungsstrom
- Io: Schwingstrom
- Is: Strom
- L: Induktivität
- R: Widerstand

## Patentansprüche

1. Gleichstromschalteinrichtung (10) zum Schalten von Gleichströmen (I), insbesondere Gleichströmen im Kiloamperbereich, mit
- einer Schalteinheit,
- einem Schwingkreis (50) und einem
- Spannungsableiter (40),
- wobei der Schwingkreis (50) beim Ausschalten der Schalteinheit einen oszillierenden Schwingstrom (Io) erzeugt, der sich mit dem während des Ausschaltens noch durch die Schalteinheit fließenden Gleichstrom (Is) überlagert, und
- mit der Schalteinheit, nachfolgend erste Schalteinheit (20) genannt, eine zweite Schalteinheit (30, 20') in Reihe geschaltet ist, deren Schaltverhalten sich von dem der ersten Schalteinheit (20) unterscheidet, und
- der Schwingkreis (50) und der Ableiter (40) elektrisch parallel zu dieser Reihenschaltung liegen, und
- die Gleichstromschalteinrichtung (10) eine Verzögerungseinrichtung (110) aufweist, die beim Ausschalten des Gleichstromes (I) die zweite Schalteinheit (30) zeitlich nach der ersten Schalteinheit (20) öffnet, und
- die Verzögerungseinrichtung (110) ein Getriebe aufweist oder durch ein Getriebe gebildet ist, das zwischen der zweiten Schalteinheit (30) und einem, die beiden Schalteinheiten (20, 30) antreibenden Antrieb (100) der Gleichstromschalteinrichtung (10) geschaltet ist,
**dadurch gekennzeichnet, dass**
die Verzögerungsdauer der Verzögerungseinrichtung (110) und die Eigenfrequenz des Schwingkreises (50) derart aufeinander abgestimmt sind, dass das Ausschalten der zweiten Schalteinheit (30) erst dann begonnen wird, wenn die Amplitude des oszillierenden Schwingstroms (Io) einen Wert von mindestens 75% des auszuschaltenden Gleichstromes (I) aufweist.

2. Gleichstromschalteinrichtung (10) nach Anspruch 1,
**dadurch gekennzeichnet, dass**
das unterschiedliche Schaltverhalten der ersten und zweiten Schalteinheit (20, 30) auf unterschiedlichen physikalischen Effekten in Schaltkammern (21, 31) der Schalteinheiten (20, 30) beruht.

3. Gleichstromschalteinrichtung (10) nach einem der voranstehenden Ansprüche,
**dadurch gekennzeichnet, dass**
die erste Schalteinheit (20) beim Ausschalten des Gleichstromes (I) eine größere Lichtbogenbrennspannung als die zweite Schalteinheit (30) erzeugt.

4. Gleichstromschalteinrichtung (10) nach einem der voranstehenden Ansprüche,
**dadurch gekennzeichnet, dass**
die erste Schalteinheit (20) eine Isoliergasschalteinheit ist.

5. Gleichstromschalteinrichtung (10) nach einem der voranstehenden Ansprüche,
**dadurch gekennzeichnet, dass**
die zweite Schalteinheit (30) derart ausgestaltet ist, dass sie Ströme mit größerer Stromsteilheit beim Nulldurchgang als die erste Schalteinheit (20) schalten kann.

6. Gleichstromschalteinrichtung (10) nach einem der voranstehenden Ansprüche,
**dadurch gekennzeichnet, dass**
die zweite Schalteinheit (30) eine Vakuumschalteinheit ist.

7. Gleichstromschalteinrichtung (10) nach einem der voranstehenden Ansprüche,
**dadurch gekennzeichnet, dass**
die Verzögerungseinrichtung (110) einen Federsprungmechanismus aufweist oder durch einen Federsprungmechanismus gebildet ist, der zwischen die zweite Schalteinheit (30) und einen Antrieb (100) der Gleichstromschalteinrichtung (10) geschaltet ist und während oder nach dem Ausschalten der ersten Schalteinheit (20) gespannt wird und zum Ausschalten der zweiten Schalteinheit (30) freigegeben wird.

8. Verfahren zum Abschalten eines Gleichstromes (I), insbesondere eines Gleichstromes im kA-Bereich, bei dem
- eine Schalteinheit (20) ausgeschaltet wird und ein Lichtbogen erzeugt wird,
- mit der an dem Lichtbogen auftretenden Lichtbogenspannung ein Schwingkreis (50) angeregt wird und oszillierender Schwingstrom (Io) erzeugt wird, der sich mit dem während des Ausschaltens noch durch die erste Schalteinheit (20) fließenden Gleichstrom (Is) unter Bildung eines Überlagerungsstromes (Ig) überlagert, und
- beim Nulldurchgang des Überlagerungsstromes (Ig) der Überlagerungsstrom (Ig) abgeschaltet wird und die im Schwingkreis (50) gespeicherte Energie durch einen Ableiter (40) abgebaut wird, und
- mit der Schalteinheit, nachfolgend erste Schalteinheit (20) genannt, eine zweite Schalteinheit (30) in Reihe geschaltet ist, deren Schaltverhalten sich von dem der ersten Schalteinheit (20) unterscheidet, wobei der Schwingkreis (50) und der Ableiter (40) elektrisch parallel zu dieser Reihenschaltung liegen, und die Gleichstromschalteinrichtung (10) eine Verzögerungseinrichtung (110) aufweist, die beim Ausschalten des Gleichstromes (I) die zweite Schalteinheit (30) zeitlich nach der ersten Schalteinheit (20) öffnet, und die Verzögerungseinrichtung (110) ein Getriebe aufweist oder durch ein Getriebe gebildet ist, das zwischen der zweiten Schalteinheit (30) und einem, die beiden Schalteinheiten (20, 30) antreibenden Antrieb (100) der Gleichstromschalteinrichtung (10) geschaltet ist, und
- das Abschalten des durch die Reihenschaltung der beiden Schalteinheiten (20, 30) fließenden Überlagerungsstromes (Ig) beim Nulldurchgang durch die zweite Schalteinheit (30) erfolgt,
**dadurch gekennzeichnet, dass** die Verzögerungsdauer der Verzögerungseinrichtung (110) und die Eigenfrequenz des Schwingkreises (50) derart aufeinander abgestimmt sind, dass das Ausschalten der zweiten Schalteinheit (30) erst dann begonnen wird, wenn die Amplitude des oszillierenden Schwingstroms (Io) einen Wert von mindestens 75% des auszuschaltenden Gleichstromes (I) aufweist.

9. Verfahren nach Anspruch 8,
**dadurch gekennzeichnet, dass**
die erste Schalteinheit (20) beim Ausschalten des Gleichstromes (I) eine größere Lichtbogenbrennspannung als die zweite Schalteinheit (30) erzeugt und die zweite Schalteinheit (30) oszillierende Ströme mit größerer Stromsteilheit beim Nulldurchgang als die erste Schalteinheit (20) schalten kann.

10. Verfahren nach Anspruch 8 oder 9,
**dadurch gekennzeichnet, dass**
die zweite Schalteinheit (30) verzögert nach der ersten Schalteinheit (20) geöffnet wird.

11. Verfahren nach Anspruch 10,
**dadurch gekennzeichnet, dass**
das Ausschalten der zweiten Schalteinheit (30) erst nach einer Zeitspanne begonnen wird, die mindestens das Dreifache der Eigenfrequenz des Schwingkreises (50) beträgt.

12. Verfahren nach einem der voranstehenden Ansprüche 8-11,
**dadurch gekennzeichnet, dass**
- während oder nach dem Ausschalten der ersten Schalteinheit (20) ein Federsprungmechanismus gespannt wird und
- das Ausschalten der zweiten Schalteinheit (30) erfolgt, indem der gespannte Federsprungmechanismus freigegeben wird.

## Claims

1. Direct-current switching device (10) for switching direct currents (I), in particular direct currents in the kiloampere range, having
- a switching unit,
- a resonant circuit (50) and an
- overvoltage arrester (40),
- wherein, when the switching unit is switched off, the resonant circuit (50) generates an oscillating resonant current (Io) which is superposed on the direct current (Is) still flowing through the switching unit during the switching off, and
- connected in series with the switching unit, referred to below as the first switching unit (20), there is a second switching unit (30, 20') whose switching behavior differs from that of the first switching unit (20), and
- the resonant circuit (50) and the arrester (40) are electrically parallel to this series circuit, and
- the direct-current switching device (10) comprises a delay device (110) which, when the direct current (I) is switched off, opens the second switching unit (30) at a time after the first switching unit (20), and
- the delay device (110) comprises a gearing mechanism or is formed of a gearing mechanism which is connected between the second switching unit (30) and a drive (100) of the direct-current switching device (10) that drives both switching units (20, 30),
**characterized in that**
the duration of delay of the delay device (110) and the natural frequency of the resonant circuit (50) are matched to one another such that the switching off of the second switching unit (30) does not start until the amplitude of the oscillating resonant current (Io) has a value of at least 75% of the direct current (I) that is to be switched off.

2. Direct-current switching device (10) according to Claim 1,
**characterized in that**
the different switching behaviors of the first and second switching units (20, 30) are based on different physical effects in switching chambers (21, 31) of the switching units (20, 30).

3. Direct-current switching device (10) according to one of the previous claims,
**characterized in that**
the first switching unit (20) generates a larger arc voltage when the direct current (I) is switched off than does the second switching unit (30).

4. Direct-current switching device (10) according to one of the previous claims,
**characterized in that**
the first switching unit (20) is an insulating gas switching unit.

5. Direct-current switching device (10) according to one of the previous claims,
**characterized in that**
the second switching unit (30) is designed in such a way that it can switch currents with a steeper current gradient at the zero transition than can the first switching unit (20).

6. Direct-current switching device (10) according to one of the previous claims,
**characterized in that** the second switching unit (30) is a vacuum switching unit.

7. Direct-current switching device (10) according to one of the previous claims,
**characterized in that** the delay device (110) comprises a snap-action spring mechanism or is formed of a snap-action spring mechanism that is connected between the second switching unit (30) and a drive (100) of the direct-current switching device (10), and is tightened during or after the first switching unit (20) is switched off and is released to switch off the second switching unit (30).

8. Method for switching off a direct current (I), in particular a direct current in the kiloampere range, in which
- a switching unit (20) is switched off and an arc is generated,
- a resonant circuit (50) is excited by the arc voltage occurring at the arc, and an oscillating resonant current (Io) is generated which is superimposed on the direct current (Is) still flowing through the first switching unit (20) during the switching off, forming a superposition current (Ig), and
- the superposition current (Ig) is switched off at a zero transition of the superposition current (Ig), and the energy stored in the resonant circuit (50) is dissipated by an arrester (40), and
- connected in series with the switching unit, referred to below as the first switching unit (20), there is a second switching unit (30) whose switching behavior differs from that of the first switching unit (20), wherein the resonant circuit (50) and the arrester (40) are electrically parallel to this series circuit, and the direct-current switching device (10) comprises a delay device (110) which, when the direct current (I) is switched off, opens the second switching unit (30) at a time after the first switching unit (20), and the delay device (110) comprises a gearing mechanism or is formed of a gearing mechanism which is connected between the second switching unit (30) and a drive (100) of the direct-current switching device (10) that drives both switching units (20, 30), and
- the superposition current (Ig) flowing through the series circuit of the two switching units (20, 30) is switched off at a zero transition by the second switching unit (30),
**characterized in that**
the duration of delay of the delay device (110) and the natural frequency of the resonant circuit (50) are matched to one another such that the switching off of the second switching unit (30) does not start until the amplitude of the oscillating resonant current (Io) has a value of at least 75% of the direct current (I) that is to be switched off.

9. Method according to Claim 8,
**characterized in that**
the first switching unit (20) generates a larger arc voltage when the direct current (I) is switched off than does the second switching unit (30), and the second switching unit (30) can switch oscillating currents with a steeper current gradient at the zero transition than can the first switching unit (20).

10. Method according to Claim 8 or 9,
**characterized in that**
the second switching unit (30) is opened with a delay after the first switching unit (20).

11. Method according to Claim 10,
**characterized in that**
the switching off of the second switching unit (30) does not start until after a period of time that is at least three times the natural frequency of the resonant circuit (50).

12. The method according to one of the previous Claims 8-11,
**characterized in that**
- a snap-action spring mechanism is tightened during or after the switching off of the first switching unit (20), and
- the second switching unit (30) is switched off **in that** the tightened snap-action spring mechanism is released.

## Revendications

1. Dispositif (10) de commutation à courant continu pour commuter des courants (I) continus, notamment des courants continus de l'ordre du kilo-ampère, comprenant
- une unité d'interruption,
- un circuit (50) oscillant et un
- parafoudre (40) de tension,
- dans lequel le circuit (50) oscillant produit, lorsque l'unité d'interruption est ouverte, un courant (Io) d'oscillation oscillant, qui se superpose au courant (Is) continu passant encore dans l'unité d'interruption pendant l'ouverture et
- avec l'unité d'interruption, dénommée dans ce qui suit première unité (20) d'interruption, est montée en série une deuxième unité (30, 20') d'interruption, dont le comportement à l'interruption se distingue de celui de la première unité (20) d'interruption et
- le circuit (50) oscillant et le parafoudre (40) de tension sont montés électriquement en parallèle avec ce circuit en série et
- le dispositif (10) de commutation à courant continu a un dispositif (110) de retard, qui, lorsque le courant (I) continu ne passe pas, ouvre la deuxième unité (30) d'interruption, dans le temps après la première unité (20) d'interruption et
- le dispositif (110) de retard a une transmission ou est formé d'une transmission, qui est montée entre la deuxième unité (30) d'interruption et un entraînement (100), entraînant les deux unités (20, 30) d'interruption, du dispositif (10) de commutation à courant continu,
**caractérisé en ce que**
la durée de retard du dispositif (110) de retard et la fréquence propre du circuit (50) oscillant sont adaptées l'une à l'autre, de manière à ce que l'ouverture de la deuxième unité (30) d'interruption ne commence que lorsque l'amplitude du courant (Io) d'oscillation oscillant a une valeur représentant au moins 75% du courant (I) continu interrompu.

2. Dispositif (10) de commutation à courant continu suivant la revendication 1,
**caractérisé en ce que**
le comportement différent à l'interruption de la première et de la deuxième unités (20, 30) d'interruption repose sur des effets physiques différents dans des chambres (21, 31) d'interruption des unités (20, 30) d'interruption.

3. Dispositif (10) de commutation à courant continu suivant l'une des revendications précédentes,
**caractérisé en ce que**
la première unité (20) d'interruption produit une chute de tension dans l'arc électrique plus grande que la deuxième unité (30) d'interruption.

4. Dispositif (10) de commutation à courant continu suivant l'une des revendications précédentes,
**caractérisé en ce que**
la première unité (20) d'interruption est une unité d'interruption à isolation par du gaz.

5. Dispositif (10) de commutation à courant continu suivant l'une des revendications précédentes,
**caractérisé en ce que**
la deuxième unité (30) d'interruption est conformée de manière à faire passer des courants ayant une pente plus grande au passage par zéro que la première unité (20) d'interruption.

6. Dispositif (10) de commutation à courant continu suivant l'une des revendications précédentes,
**caractérisé en ce que**
la deuxième unité (30) d'interruption est une unité d'interruption à vide.

7. Dispositif (10) de commutation à courant continu suivant l'une des revendications précédentes,
**caractérisé en ce que**
le dispositif (110) de retard a un mécanisme à saut à ressort ou est formé par un mécanisme à saut à ressort, qui est monté entre la deuxième unité (30) d'interruption et un entraînement (100) du dispositif (10) de commutation à courant continu et qui est bandé avant ou pendant l'ouverture de la première unité (20) d'interruption et libéré pour ouvrir la deuxième unité (30) d'interruption.

8. Procédé d'interruption d'un courant (I) continu, notamment d'un courant continu de l'ordre du kA, dans lequel
- on ouvre une unité (20) d'interruption et on produit un arc électrique,
- par la tension d'arc électrique se produisant sur l'arc électrique, on excite un circuit (50) oscillant et on produit un courant (Io) d'oscillation oscillant, qui, en formant un courant (Ig) de superposition se superpose au courant (Is) continu passant encore dans la première unité (20) d'interruption pendant l'ouverture et
- au passage par zéro du courant (Ig) de superposition, on interrompt le courant (Ig) de superposition et on supprime, par un parafoudre (40), l'énergie emmagasinée dans le circuit (50) oscillant et
- avec l'unité d'interruption, dénommée dans ce qui suit première unité (20) d'interruption, est montée en série une deuxième unité (30) d'interruption, dont la propriété d'interruption se distingue de celle de la première unité (20) d'interruption, le circuit (50) oscillant et le parafoudre (40) étant électriquement en parallèle avec ce circuit série, et le dispositif (10) de commutation à courant continu ayant un dispositif (110) de retard, qui, lorsque le courant continu est interrompu, ouvre la deuxième unité (30) d'interruption, dans le temps après la première unité (20) d'interruption, et le dispositif (110) de retard a une transmission ou est formé d'une transmission, qui est montée entre la première unité (30) d'interruption et un entraînement (100), entraînant les deux unités (20, 30) d'interruption, du dispositif (10) de commutation à courant continu et
- l'interruption du courant (Ig) de superposition passant dans le circuit série des deux unités (20, 30) d'interruption s'effectue au passage par zéro dans la deuxième unité (30) d'interruption,
**caractérisé en ce que**
la durée de retard du dispositif (110) de retard et la fréquence propre du circuit (50) oscillant sont adaptées l'une à l'autre, de manière à ce que l'ouverture de la deuxième unité (30) d'interruption ne commence que lorsque l'amplitude du courant (Io) d'oscillation oscillant a une valeur représentant au moins 75% du courant (I) continu interrompu.

9. Procédé suivant la revendication 8,
**caractérisé en ce que**
la première unité (20) d'interruption produit une chute de tension dans l'arc électrique plus grande que la deuxième unité (30) d'interruption et la deuxième unité (30) d'interruption est conformée de manière à pouvoir faire passer des courants ayant une pente plus grande au passage par zéro que la première unité (20) d'interruption.

10. Procédé suivant la revendication 8 ou 9,
**caractérisé en ce que**
l'on ouvre la deuxième unité (30) d'interruption de manière retardée après la première unité (30) d'interruption.

11. Procédé suivant la revendication 10,
**caractérisé en ce que**
l'on ne fait commencer l'ouverture de la deuxième unité (30) d'interruption qu'après un laps de temps, qui correspond au moins à trois fois la fréquence propre du circuit (50) oscillant.

12. Procédé suivant l'une des revendications 8 à 11,
**caractérisé en ce que**
- pendant ou après l'ouverture de la première unité (20) d'interruption, on bande un mécanisme à saut à ressort et
- l'ouverture de la deuxième unité (30) d'interruption s'effectue en libérant le mécanisme à saut à ressort bandé.
